# EUROPEAN PATENT SPECIFICATION

(11) **EP 3 992 349 B1**
(45) Date of publication and mention of the grant of the patent: **19.11.2025**
(21) Application number: 20833419.3
(22) Date of filing: 12.06.2020
(51) Int. Cl.: D06F 39/02

(54) **CLOTHING TREATMENT APPARATUS**
KLEIDUNGSBEHANDLUNGSVORRICHTUNG
APPAREIL DE TRAITEMENT DE VÊTEMENTS

(30) Priority: 25.06.2019 CN 201910555556
(43) Date of publication of application: 04.05.2022
(73) Proprietor: Qingdao Haier Washing Machine Co., Ltd., Qingdao, Shandong 266101 (CN); Haier Smart Home Co., Ltd., Qingdao, Shandong 266101 (CN)
(72) Inventor: HUANG, Tao, Qingdao, Shandong 266101 (CN); HUANG, Bencai, Qingdao, Shandong 266101 (CN)
(74) Representative: Jakelski & Althoff Patentanwälte PartG mbB
(86) International application number: PCT/CN2020/095738
(87) International publication number: WO 2020/259314

(56) References cited:
- EP-A1- 2 251 480
- CN-A- 1 715 524
- CN-A- 104 674 511
- CN-A- 104 674 511
- CN-A- 105 970 560
- CN-A- 107 354 679
- CN-A- 107 974 807
- CN-A- 108 315 964
- CN-U- 204 589 638
- CN-U- 204 589 638
- CN-U- 208 266 487
- DE-A1- 3 403 622
- US-A- 3 975 931

## Description

### TECHNICAL FIELD

The present invention belongs to the field of clothing treatment technologies, and particularly, provides a clothing treatment apparatus.

### BACKGROUND ART

Clothing treatment apparatuses are machines capable of washing, spin-drying, dry-cleaning and/or drying clothing. Common clothing treatment apparatuses include washing machines, shoe washing machines, clothes dryers, dry-cleaning machines, washing and drying machines. Taking a washing machine as an example, to ensure washing effect of clothing, a detergent/washing powder is often added to water before washing clothing to remove dirt and/or grease stains from the clothing by using a surfactant.

In the prior art, a washing machine is usually provided with a detergent dispensing apparatus by which a detergent can be dispensed into a washing cavity of the washing machine. The detergent dispensing apparatus is generally a drawer type detergent dispensing apparatus. To facilitate the installation of the detergent dispensing apparatus, the washing machine is usually provided with an accommodating box, the detergent dispensing apparatus is arranged in the accommodating box and is slidably connected to the accommodating box. When a detergent needs to be added, the detergent dispensing apparatus can be pulled out of the accommodating box before injecting the detergent into the detergent dispensing apparatus. However, in a process of injecting a detergent into the detergent dispensing apparatus, detergent may be spilled, and spilled detergent will flow into the accommodating box along the detergent dispensing apparatus. Excessive detergent if any accumulated in the accommodating box will affect sliding of the detergent dispensing apparatus. Moreover, if detergent is accumulated in the accommodating box for a long time, bacteria may breed, so that the accommodating box needs to be cleaned regularly. However, it is necessary to take the detergent dispensing apparatus out of the accommodating box before cleaning the accommodating box, and then the detergent dispensing apparatus is installed into the accommodating box after cleaning the accommodating box. The whole process is very tedious and seriously affects user experience. Moreover, frequent removal and installation of the detergent dispensing apparatus out of and into the accommodating box tend to damage the detergent dispensing apparatus and/or the accommodating box, which will affect normal use of the detergent dispensing apparatus, especially after the detergent dispensing apparatus is damaged, which may cause detergent leakage.

Therefore, a new clothing treatment apparatus is needed in the field to resolve the above problems.

### SUMMARY OF THE INVENTION

To resolve the above problems in the prior art, that is, to resolve a problem of poor user experience due to inconvenient cleaning of an accommodating box for installing a clothing treatment agent dispensing apparatus of an existing clothing treatment apparatus, the present invention provides a clothing treatment apparatus, including an accommodating member and a clothing treatment agent dispensing apparatus provided in the accommodating member, the clothing treatment agent dispensing apparatus is slidably connected to the accommodating member; a water channel is formed between an outer wall of the clothing treatment agent dispensing apparatus and an inner wall of the accommodating member; and a water outlet is formed on the accommodating member, and is communicated with the water channel.

In the clothing treatment apparatus, the water channel includes a first water channel formed between an outer side wall of the clothing treatment agent dispensing apparatus and an inner side wall of the accommodating member.

In the clothing treatment apparatus, the water channel further includes a second water channel formed between an outer rear wall of the clothing treatment agent dispensing apparatus and an inner rear wall of the accommodating member.

In the clothing treatment apparatus, the first water channel is communicated with the second water channel.

In a preferred technical solution for the clothing treatment apparatus, the water outlet is formed on a bottom plate of the accommodating member.

In a preferred technical solution for the clothing treatment apparatus, the bottom plate is obliquely provided and the water outlet is located at a lower end of the bottom plate to enable all water in the water channel to flow to the water outlet.

In a preferred technical solution for the clothing treatment apparatus, the clothing treatment agent dispensing apparatus includes a storage container, a dispensing container and a liquid delivery tube, the storage container is secured in the accommodating member, the dispensing container is slidably connected to the accommodating member, one end of the liquid delivery tube is communicated with the dispensing container, the other end of the liquid delivery tube is inserted into the storage container, and a length of the liquid delivery tube is configured so that the other end of the liquid delivery tube does not come out of the storage container when the dispensing container moves away from the storage container.

In a preferred technical solution for the clothing treatment apparatus, the storage container is provided with a guide structure, and the other end of the liquid delivery tube is inserted through the guide structure into the storage container.

In a preferred technical solution for the clothing treatment apparatus, the clothing treatment agent dispensing apparatus further includes a sealing member, the sealing member includes a main body part, and a first sealing portion and a second sealing portion formed on the main body part, the first sealing portion is hermetically affixed to an outer wall of the liquid delivery tube, and the sealing member is hermetically connected to the guide structure through the second sealing portion.

In a preferred technical solution for the clothing treatment apparatus, the sealing member is a sealing ring, and a main body part of the sealing ring has an inner diameter larger than an outer diameter of the liquid delivery tube.

In a preferred technical solution for the clothing treatment apparatus, the first sealing portion is a sealing lip formed on an inner wall of the main body part of the sealing ring.

In a preferred technical solution for the clothing treatment apparatus, the sealing lip is obliquely provided in a direction from the dispensing container to the storage container.

In a preferred technical solution for the clothing treatment apparatus, the sealing ring is hermetically connected to an outer wall of the guide structure through the second sealing portion.

In a preferred technical solution for the clothing treatment apparatus, the second sealing portion includes at least one annular sealing rib or sealing groove formed on the inner wall of the main body part of the sealing ring, at least one annular sealing groove or sealing rib is correspondingly provided on the outer wall of the guide structure, the annular sealing rib is in a one-to-one correspondence with the annular sealing groove, and the annular sealing rib is in a transition fit or interference fit with the annular sealing groove to hermetically seal the sealing ring and the guide structure.

In a preferred technical solution for the clothing treatment apparatus, the second sealing portion includes a first annular sealing rib and a second annular sealing rib formed on the inner wall of the main body part of the sealing ring, a first annular sealing groove and a second annular sealing groove are correspondingly provided on the outer wall of the guide structure, the first annular sealing rib is in a transition fit or interference fit with the first annular sealing groove, and the second annular sealing rib is in a transition fit or interference fit with the second annular sealing groove.

In a preferred technical solution for the clothing treatment apparatus, the second sealing portion includes at least one annular sealing rib or sealing groove formed on an outer wall of the main body part of the sealing ring, at least one annular sealing groove or sealing rib is correspondingly provided on an inner wall of the guide structure, the annular sealing rib is in a one-to-one correspondence with the annular sealing groove, and the annular sealing rib is in a transition fit or interference fit with the annular sealing groove to hermetically seal the sealing ring and the guide structure.

In a preferred technical solution for the clothing treatment apparatus, the guide structure is a guide pipe fitting formed on an outer wall of the storage container.

In a preferred technical solution for the clothing treatment apparatus, the accommodating member is an accommodating box.

In a preferred technical solution for the clothing treatment apparatus, the clothing treatment apparatus is a washing machine, and the clothing treatment agent dispensing apparatus is a dispensing box for dispensing a detergent or a conditioner.

It can be understood by a person skilled in the art that, in the present invention, by forming a water channel between the outer wall of the clothing treatment agent dispensing apparatus and the inner wall of the accommodating member, it is unnecessary to take the clothing treatment agent dispensing apparatus out of the accommodating member when the accommodating member needs to be cleaned, and water can be directly injected to the water channel to clean both the accommodating member and the outer wall of the clothing treatment agent dispensing apparatus. Compared with the prior art, the clothing treatment apparatus greatly simplifies a process of cleaning the accommodating member, and improves user experience. In addition, the accommodating member is provided with a water outlet in communication with the water channel, so that water in the water channel can be drained.

Further, the first water channel is communicated with the second water channel, in this case, only one water outlet is required for convenient design and machining, which can reduce cost.

Further, the bottom plate is obliquely provided and the water outlet is located at a lower end of the bottom plate to enable all water in the water channel to flow to the water outlet. With such an arrangement, it is easy to drain all water to avoid water remaining in the water channel.

Further, the clothing treatment agent dispensing apparatus is provided with a split structure, that is, the storage container and the dispensing container are provided separately, and only the dispensing container is slidably connected to the accommodating member, so that a user only needs to pull out the dispensing container without pulling out the storage container when the user dispenses a clothing treatment agent, which is labor-saving and fast. In addition, a liquid delivery tube is arranged between the dispensing container and the storage container, and one end of the liquid delivery tube extends into the storage container. When the dispensing container is pulled, the liquid delivery tube moves with the dispensing container, but the other end of the liquid delivery tube will not come out of the storage container, so that the liquid delivery tube always allows the dispensing container to be communicated with the storage container. Therefore, when a clothing treatment agent is injected into the dispensing container, the clothing treatment agent can be delivered to the storage container through the liquid delivery tube.

Further, the liquid delivery tube is inserted into the storage container through a guide structure provided on the storage container. The guide structure is configured to guide the liquid delivery tube to prevent the liquid delivery tube from deviation in a moving process, thereby improving the reliability of the clothing treatment agent dispensing apparatus.

Further, the main body part of the sealing ring has an inner diameter larger than an outer diameter of the liquid delivery tube. With such an arrangement, it is easy to install the liquid delivery tube, so that assembly efficiency of the clothing treatment agent dispensing apparatus can be improved.

Further, the first sealing portion is a sealing lip formed on an inner wall of a sealing ring. The sealing lip is hermetically affixed to an outer wall of the liquid delivery tube, so that a clothing treatment agent in the storage container can be prevented from leaking along the outer wall of the liquid delivery tube, and when the liquid delivery tube is pulled out, the sealing lip can scrape off the clothing treatment agent adhered to the outer wall of the liquid delivery tube to prevent the clothing treatment agent from leaking.

Further, the sealing lip is obliquely provided in a direction from the dispensing container to the storage container. With such an arrangement, it is easy to install the liquid delivery tube, so that assembly efficiency of a clothing treatment agent component can be further improved. Moreover, the inwardly inclined sealing lip is affixed more closely to the outer wall of the liquid delivery tube; and when the liquid delivery tube is pulled out, it is more favorable for scraping off the clothing treatment agent adhered to the outer wall of the liquid delivery tube, so that sealing effect of the sealing ring can be further improved.

Further, the sealing ring is hermetically connected to an outer wall of the guide structure through the second sealing portion. With such an arrangement, movement of the liquid delivery tube can be prevented from being influenced by an excessive friction on the outer wall of the liquid delivery tube, and sealability of the sealing ring can be improved. Specifically, if the sealing ring is provided between the inner wall of the guide structure and the outer wall of the liquid delivery tube, movement of the liquid delivery tube will be influenced by a large friction on the outer wall of the liquid delivery tube. Therefore, the sealing ring can be hermetically connected to the outer wall of the guide structure to prevent a large friction on the outer wall of the liquid delivery tube. In addition, the clothing treatment agent in the storage container flows to the sealing ring along a gap between the liquid delivery tube and the guide structure, and can leak from a possible gap between the sealing ring and the outer wall of the guide structure by reverse flow, thereby improving the sealability of the sealing ring.

Further, the annular sealing rib is in a transition fit or interference fit with the annular sealing groove. With such an arrangement, the connection stability and sealability between the sealing ring and the guide pipe fitting can be improved.

Further, the second sealing portion includes a first annular sealing rib and a second annular sealing rib formed on the inner wall of the main body part of the sealing ring, a first annular sealing groove and a second annular sealing groove are correspondingly provided on the outer wall of the guide structure, the first annular sealing rib is in a transition fit or interference fit with the first annular sealing groove, and the second annular sealing rib is in a transition fit or interference fit with the second annular sealing groove. By providing two sets of annular sealing ribs and annular sealing grooves, a double protection effect can be provided, that is, after one set of annular sealing ribs and annular sealing grooves fails, the sealing ring can be hermetically connected to the guide pipe fitting through another set of annular sealing ribs and annular sealing grooves, thereby further improving the connection stability and sealability between the sealing ring and the guide pipe fitting.

### BRIEF DESCRIPTION OF DRAWINGS

Preferred implementations of the present invention will be described below with reference to the accompanying drawings and in connection with a washing machine, in the drawings:
FIG. 1 is a schematic diagram I showing a structure of a clothing treatment agent dispensing apparatus according to the present invention;
FIG. 2 is a schematic diagram II showing a structure of a clothing treatment agent dispensing apparatus according to the present invention;
FIG. 3 is a schematic diagram showing structures of an accommodating member and a storage container of a clothing treatment agent dispensing apparatus according to the present invention;
FIG. 4 is a schematic diagram showing structures of a dispensing container and a liquid delivery tube of a clothing treatment agent dispensing apparatus according to the present invention;
FIG. 5 is a sectional view of a clothing treatment agent dispensing apparatus according to the present invention; and
FIG. 6 is a partial enlarged view of FIG. 5.

### DETAILED DESCRIPTION OF THE EMBODIMENTS

First, it should be understood by a person skilled in the art that the implementations described below are merely intended to explain the technical principles of the present invention, and are not intended to limit the protection scope of the present invention. For example, although the following implementations are explained and illustrated in connection with a washing machine, this is not limiting, and the technical solutions of the present invention are also applicable to another clothing treatment apparatus, such as an air washing apparatus, a shoe washing machine, and a washing and drying machine. Changes in such application object do not deviate from the principle and scope of the present invention.

It should be noted that in the description of the present invention, an orientation or positional relationship indicated by the terms "left", "right", "inner", "outer" and the like is an orientation or positional relationship shown based on the accompanying drawings, is intended only to facilitate the description rather than indicating or implying that the device or element must have a specific orientation, or be constructed and operated in a specific orientation, and therefore should not be construed as a limitation to the present invention. In addition, the terms "first" and "second" are used for descriptive purposes only and are not to be construed as indicating or implying a relative importance.

In addition, it should also be noted that in the description of the present invention, unless otherwise specified and defined, the terms "arranged", "installed", "connection" and "connected" should be understood in a broad sense, which, for example, may be understood as fixed connection, detachable connection or integral connection; may be understood as mechanical connection or electrical connection; or may be understood as direct connection, indirect connection via an intermediate medium, or communication between the interiors of two elements. The specific meanings of the above terms in the present invention can be understood in specific cases by a person skilled in the art.

Based on the background art, it is pointed out that an accommodating box for installing a clothing treatment agent dispensing apparatus of an existing washing machine is inconvenient to clean, which leads to a problem of poor user experience. The present invention provides a washing machine designed to enable a user to clean an accommodating box more conveniently, so as to improve user experience.

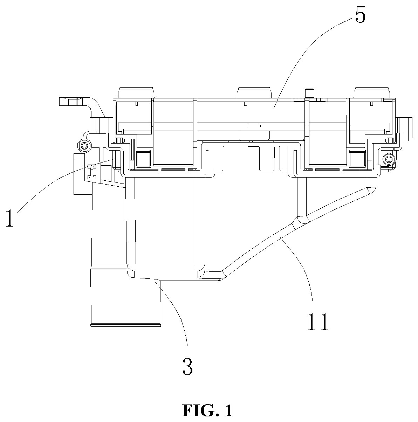

Specifically, as shown in FIG. 1 to FIG. 3, the washing machine of the present invention includes an accommodating member 1 and a clothing treatment agent dispensing apparatus provided in the accommodating member 1, the clothing treatment agent dispensing apparatus is slidably connected to the accommodating member 1; a water channel 2 is formed between an outer wall of the clothing treatment agent dispensing apparatus and an inner wall of the accommodating member 1; and a water outlet 3 is formed on the accommodating member 1, and is communicated with the water channel 2. It can be known from the background art that, in the prior art, it is necessary to take the clothing treatment agent dispensing apparatus out of the accommodating member 1 before cleaning the accommodating member 1, and then the clothing treatment agent dispensing apparatus is installed into the accommodating member 1 after cleaning the accommodating member 1. The whole process is very tedious, with poor user experience. According to the present invention, by forming a water channel 2 between the outer wall of the clothing treatment agent dispensing apparatus and the inner wall of the accommodating member 1, it is unnecessary to take the clothing treatment agent dispensing apparatus out of the accommodating member 1 when the accommodating member 1 needs to be cleaned, and water can be directly injected to the water channel 2 to clean both the accommodating member 1 and the outer wall of the clothing treatment agent dispensing apparatus. Moreover, a water outlet 3 is formed on the accommodating member 1, and is communicated with the water channel 2, so that water in the water channel 2 can be drained. The accommodating member 1 is an accommodating box, and the clothing treatment agent dispensing apparatus is provided in the accommodating box and slidably connected to the accommodating box. Certainly, the accommodating member 1 may also be provided as an accommodating bucket or an accommodating box. Such adjustment and change to a specific structural form of the accommodating member 1 do not deviate from the principle and scope of the present invention, and should be limited within the protection scope of the present invention.

It should be noted that, the clothing treatment agent may be a detergent, then the clothing treatment agent dispensing apparatus is a dispensing box for dispensing the detergent, alternatively, the clothing treatment agent may also be a conditioner, then the clothing treatment agent dispensing apparatus is a dispensing box for dispensing the conditioner, and so on. Such adjustment and change to a specific category and a specific type of the clothing treatment agent do not deviate from the principle and scope of the present invention, and should be limited within the protection scope of the present invention.

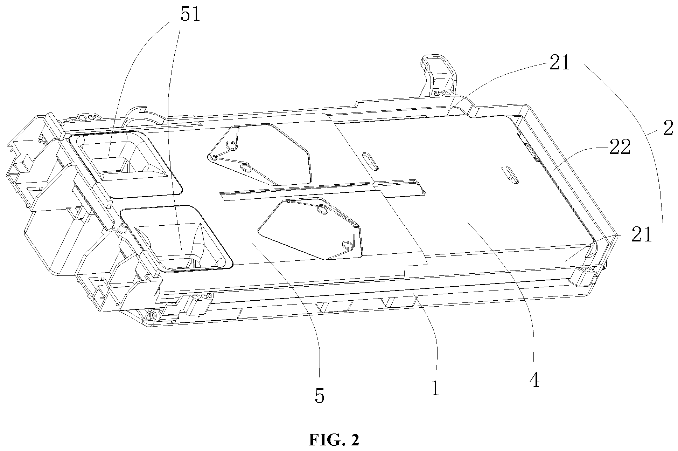

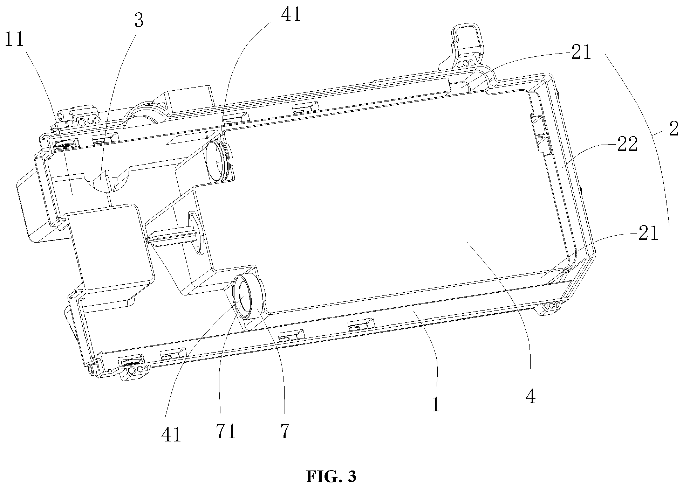

As shown in FIG. 2 and FIG. 3, the water channel 2 includes a first water channel 21 formed between an outer side wall of the clothing treatment agent dispensing apparatus and an inner side wall of the accommodating member 1. Further, the water channel 2 further includes a second water channel 22 formed between an outer rear wall of the clothing treatment agent dispensing apparatus and an inner rear wall of the accommodating member 1. The first water channel 21 is communicated with the second water channel 22, in this case, only one water outlet 3 is required. Certainly, the first water channel 21 may not be communicated with the second water channel 22, in this case, it is necessary to provide two water outlets 3 connected to the first water channel 21 and the second water channel 22 respectively.

Preferably, as shown in FIG. 1 and FIG. 3, the water outlet 3 is formed on a bottom plate 11 of the accommodating member 1. The water outlet 3 is formed on the bottom plate 11 to facilitate drainage of water from the accommodating member 1. Further preferably, the bottom plate 11 is obliquely provided and the water outlet 3 is located at a lower end of the bottom plate 11 to enable all water in the water channel 2 to flow to the water outlet 3, and avoid water remaining in the water channel 2.

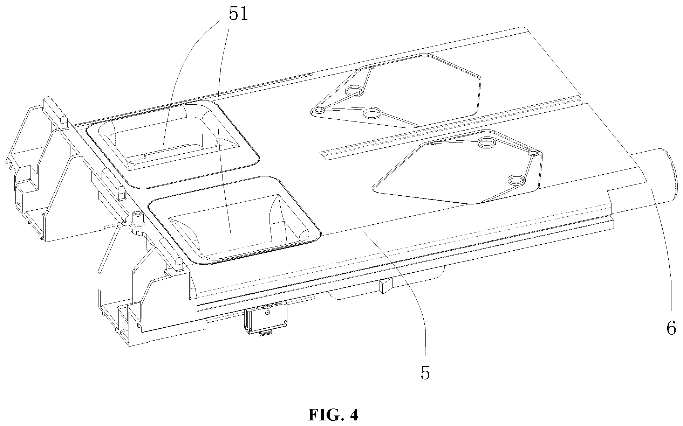

Preferably, as shown in FIG. 2 to FIG. 4, the clothing treatment agent dispensing apparatus includes a storage container 4, a dispensing container 5 and a liquid delivery tube 6, the storage container 4 is secured in the accommodating member 1, the dispensing container 5 is slidably connected to the accommodating member 1, one end of the liquid delivery tube 6 is communicated with the dispensing container 5, the other end of the liquid delivery tube 6 is inserted into the storage container 4, and a length of the liquid delivery tube 6 is configured so that the other end of the liquid delivery tube 6 does not come out of the storage container 4 when the dispensing container 5 moves away from the storage container 4. The clothing treatment agent dispensing apparatus is provided with a split structure, that is, the storage container 4 and the dispensing container 5 are provided separately, and only the dispensing container 5 is slidably connected to the accommodating member 1, so that a user only needs to pull out the dispensing container 5 without pulling out the storage container 4 when the user needs to add a clothing treatment agent, which improves user experience. In addition, the dispensing container 5 is communicated with the storage container 4 through the liquid delivery tube 6, and a right end of the liquid delivery tube 6 is inserted into the storage container 4, so that when the dispensing container 5 is pulled (as shown in the figures, the dispensing container 5 moves to the left), the liquid delivery tube 6 moves with the dispensing container 5, but the right end of the liquid delivery tube 6 does not come out of the storage container 4, so that the clothing treatment agent injected into the dispensing container 5 can be delivered into the storage container 4 through the liquid delivery tube 6. The user pushes the dispensing container 5 and the liquid delivery tube 6 together into the accommodating member 1 after adding the clothing treatment agent to allow a right part of the liquid delivery tube 6 to be reinserted into the storage container 4.

In addition, it should also be noted that as shown in FIG. 2 and FIG. 3, the dispensing container 5 is provided with two dispensing cavities 51, one of which is a detergent dispensing cavity and the other is a conditioner dispensing cavity. Correspondingly, the storage container 4 is provided with two storage cavities: a detergent storage cavity and a conditioner storage cavity, the detergent dispensing cavity is communicated with the detergent storage cavity through a liquid delivery tube 6, and the conditioner dispensing cavity is communicated with the conditioner storage cavity through another liquid delivery tube 6. Certainly, the number of the dispensing cavities 51 is not limited to the above two, for example, the number of the dispensing cavities 51 may also be one or three. Such adjustment and change to a specific number of the dispensing cavities 51 do not deviate from the principle and scope of the present invention, and should be limited within the protection scope of the present invention.

In addition, it should also be noted that the clothing treatment agent dispensing apparatus can also be provided integrally, that is, the storage container 4 and the dispensing container 5 are fixedly connected or integrated, and in this case, the liquid delivery tube 6 can be omitted.

Preferably, as shown in FIG. 3, the storage container 4 is provided with a guide structure 41, and the other end of the liquid delivery tube 6 extends into the storage container 4 through the guide structure 41. The guide structure 41 is a guide pipe fitting 41 formed on an outer wall of the storage container 4, and a right end of the liquid delivery tube 6 is inserted into the storage container 4 through the guide pipe fitting 41. The guide pipe fitting 41 guides the liquid delivery tube 6 when the liquid delivery tube 6 moves with the dispensing container 5. Certainly, the guide structure 41 can also be provided as a guide rib, a guide tube or another structure. Such adjustment and change to a specific structural form of the guide structure 41 do not deviate from the principle and scope of the present invention, and should be limited within the protection scope of the present invention.

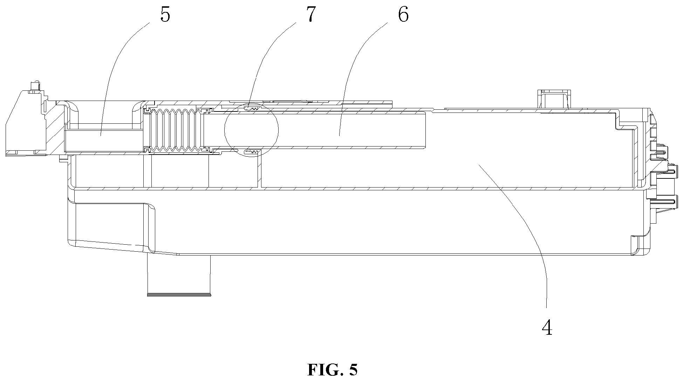

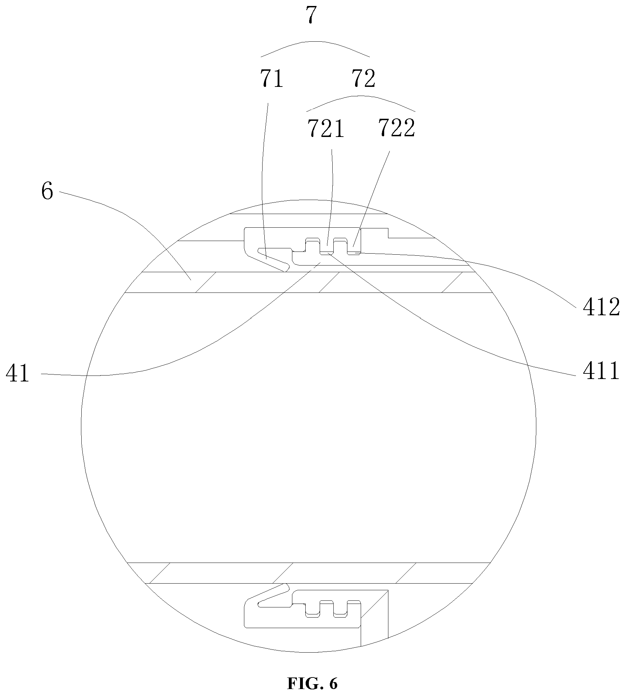

Preferably, as shown in FIG. 3, FIG. 5 and FIG. 6, the clothing treatment agent dispensing apparatus further includes a sealing member 7, the sealing member 7 includes a main body part, and a first sealing portion 71 and a second sealing portion 72 formed on the main body part, the first sealing portion 71 is hermetically affixed to an outer wall of the liquid delivery tube 6, and the sealing member 7 is hermetically connected to the guide pipe fitting 41 through the second sealing portion 72. The sealing member 7 is a sealing ring 7, and a main body part of the sealing ring 7 has an inner diameter larger than an outer diameter of the liquid delivery tube 6. With such an arrangement, the liquid delivery tube 6 can be smoothly inserted into the sealing ring 7.

Preferably, as shown in FIG. 3, FIG. 5 and FIG. 6, the first sealing portion 71 is a sealing lip 71 formed on an inner wall of the main body part of the sealing ring 7. The sealing lip 71 is hermetically affixed to an outer wall of the liquid delivery tube 6, so that a clothing treatment agent in the storage container 4 can be prevented from leaking along the outer wall of the liquid delivery tube 6, and when the liquid delivery tube 6 is pulled out, the sealing lip 71 can scrape off the clothing treatment agent adhered to the outer wall of the liquid delivery tube 6 to prevent the clothing treatment agent from leaking. Further preferably, the sealing lip 71 is obliquely provided in a direction from the dispensing container 5 to the storage container 4. With such an arrangement, the liquid delivery tube 6 can be smoothly inserted into the sealing ring 7, and the sealing lip 71 can have a better sealing effect.

Preferably, as shown in FIG. 3, FIG. 5 and FIG. 6, the sealing ring 7 is hermetically connected to an outer wall of the guide pipe fitting 41 through the second sealing portion 72. The second sealing portion 72 includes at least one annular sealing rib formed on the inner wall of the main body part of the sealing ring 7, at least one annular sealing groove is correspondingly provided on the outer wall of the guide pipe fitting 41, the annular sealing rib is in a one-to-one correspondence with the annular sealing groove, and the annular sealing rib is in a transition fit or interference fit with the annular sealing groove to hermetically seal the sealing ring 7 and the guide pipe fitting 41. The at least one annular sealing rib includes a first annular sealing rib 721 and a second annular sealing rib 722, and the at least one annular sealing groove includes a first annular sealing groove 411 and a second annular sealing groove 412. The first annular sealing rib 721 is in a transition fit or interference fit with the first annular sealing groove 411, and the second annular sealing rib 722 is in a transition fit or interference fit with the second annular sealing groove 412. By providing two annular sealing ribs and annular sealing grooves, a double protection effect can be provided, that is, after one set of annular sealing ribs and annular sealing grooves fails, the sealing ring 7 can be hermetically connected to the guide pipe fitting 41 through another set of annular sealing ribs and annular sealing grooves. Certainly, the number of the annular sealing ribs and annular sealing grooves is not limited to the above two, for example, the number of the annular sealing ribs and annular sealing grooves may also be one or three. Such adjustment and change to a specific number of the annular sealing ribs and annular sealing grooves do not deviate from the principle and scope of the present invention, and should be limited within the protection scope of the present invention. Certainly, the second sealing portion 72 may also include at least one annular sealing groove formed on the inner wall of the main body part of the sealing ring 7, at least one annular sealing rib is correspondingly provided on the outer wall of the guide pipe fitting 41, the annular sealing rib is in a one-to-one correspondence with the annular sealing groove, and the annular sealing rib is in a transition fit or interference fit with the annular sealing groove to hermetically seal the sealing ring 7 and the guide pipe fitting 41.

In addition, as a variation of the above embodiment, the sealing ring 7 may also be hermetically connected to an inner wall of the guide pipe fitting 41 through the second sealing portion 72. In this case, the second sealing portion 72 includes at least one annular sealing rib or sealing groove formed on an outer wall of the main body part of the sealing ring 7, at least one annular sealing groove or sealing rib is correspondingly provided on the inner wall of the guide pipe fitting 41, the annular sealing rib is in a one-to-one correspondence with the annular sealing groove, and the annular sealing rib is in a transition fit or interference fit with the annular sealing groove to hermetically seal the sealing ring 7 and the guide pipe fitting 41.

So far, the technical solutions of the present invention have been described with reference to the preferred implementations shown in the accompanying drawings. However, it easily occurs to a person skilled in the art that the protection scope of the present invention is obviously not limited to these specific implementations.

## Claims

1. A clothing treatment apparatus, comprising an accommodating member (1) and a clothing treatment agent dispensing apparatus provided in the accommodating member (1), wherein the clothing treatment agent dispensing apparatus is slidably connected to the accommodating member (1); a water channel (2) is formed between an outer wall of the clothing treatment agent dispensing apparatus and an inner wall of the accommodating member (1); and a water outlet (3) is formed on the accommodating member (1), and is communicated with the water channel (2),
**characterized in that** the water channel (2) comprises a first water channel (21) formed between an outer side wall of the clothing treatment agent dispensing apparatus and an inner side wall of the accommodating member (1) and a second water channel (22) formed between an outer rear wall of the clothing treatment agent dispensing apparatus and an inner rear wall of the accommodating member (1), wherein the first water channel (21) is communicated with the second water channel (22).

2. The clothing treatment apparatus according to claim 1, wherein the water outlet (3) is formed on a bottom plate (11) of the accommodating member (1).

3. The clothing treatment apparatus according to claim 2, wherein the bottom plate (11) is obliquely provided and the water outlet (3) is located at a lower end of the bottom plate (11) to enable all water in the water channel (2) to flow to the water outlet (3).

4. The clothing treatment apparatus according to claim 1, wherein the clothing treatment agent dispensing apparatus comprises a storage container (4), a dispensing container (5) and a liquid delivery tube (6), the storage container (4) is secured in the accommodating member (1), the dispensing container (5) is slidably connected to the accommodating member (1), one end of the liquid delivery tube (6) is communicated with the dispensing container (5), the other end of the liquid delivery tube (6) is inserted into the storage container (4), and a length of the liquid delivery tube (6) is configured so that the other end of the liquid delivery tube (6) does not come out of the storage container (4) when the dispensing container (5) moves away from the storage container (4).

5. The clothing treatment apparatus according to claim 4, wherein the storage container (4) is provided with a guide structure (41), and the other end of the liquid delivery tube (6) is inserted through the guide structure (41) into the storage container (4).

6. The clothing treatment apparatus according to claim 5, wherein the clothing treatment agent dispensing apparatus further comprises a sealing member (7), the sealing member (7) comprises a main body part, and a first sealing portion (71) and a second sealing portion (72) formed on the main body part, the first sealing portion (71) is hermetically affixed to an outer wall of the liquid delivery tube (6), and the sealing member (7) is hermetically connected to the guide structure (41) through the second sealing portion (72).

7. The clothing treatment apparatus according to claim 6, wherein the sealing member (7) is a sealing ring, and a main body part of the sealing ring has an inner diameter larger than an outer diameter of the liquid delivery tube (6).

8. The clothing treatment apparatus according to claim 5, wherein the guide structure (41) is a guide pipe fitting formed on an outer wall of the storage container (4).

9. The clothing treatment apparatus according to any one of claims 1 to 8, wherein the accommodating member (1) is an accommodating box.

10. The clothing treatment apparatus according to any one of claims 1 to 8, wherein the clothing treatment apparatus is a washing machine, and the clothing treatment agent dispensing apparatus is a dispensing box for dispensing a detergent or a conditioner.

## Patentansprüche

1. Eine Bekleidungsbehandlungsvorrichtung, aufweisend ein Aufnahmeelement (1) und eine Bekleidungsbehandlungsmittelabgabevorrichtung, die in dem Aufnahmeelement (1) angeordnet ist, wobei die Bekleidungsbehandlungsmittelabgabevorrichtung verschiebbar mit dem Aufnahmeelement (1) verbunden ist; ein Wasserkanal (2) ist zwischen einer Außenwand der Bekleidungsbehandlungsmittelabgabevorrichtung und einer Innenwand des Aufnahmeelements (1) gebildet; und ein Wasserauslass (3) ist auf dem Aufnahmeelement (1) gebildet und steht mit dem Wasserkanal (2) in Verbindung,
**dadurch gekennzeichnet, dass** der Wasserkanal (2) einen ersten Wasserkanal (21), der zwischen einer äußeren Seitenwand der Bekleidungsbehandlungsmittelabgabevorrichtung und einer inneren Seitenwand des Aufnahmeelements (1) gebildet ist, und einen zweiten Wasserkanal (22), der zwischen einer äußeren Rückwand der Bekleidungsbehandlungsmittelabgabevorrichtung und einer inneren Rückwand des Aufnahmeelements (1) gebildet ist, aufweist, wobei der erste Wasserkanal (21) mit dem zweiten Wasserkanal (22) verbunden ist.

2. Die Bekleidungsbehandlungsvorrichtung nach Anspruch 1, wobei der Wasserauslass (3) auf einer Bodenplatte (11) des Aufnahmeelements (1) gebildet ist.

3. Die Bekleidungsbehandlungsvorrichtung nach Anspruch 2, wobei die Bodenplatte (11) schräg bereitgestellt ist und der Wasserauslass (3) an einem unteren Ende der Bodenplatte (11) angeordnet ist, um es dem gesamten Wasser im Wasserkanal (2) zu ermöglichen, in den Wasserauslass (3) zu fließen.

4. Die Bekleidungsbehandlungsvorrichtung nach Anspruch 1, wobei die Bekleidungsbehandlungsmittelabgabevorrichtung einen Vorratsbehälter (4), einen Abgabebehälter (5) und einen Flüssigkeitszufuhrrohr (6) umfasst, der Vorratsbehälter (4) im Aufnahmeelement (1) befestigt ist, der Abgabebehälter (5) verschiebbar mit dem Aufnahmeelement (1) verbunden ist, ein Ende des Flüssigkeitszufuhrrohrs (6) mit dem Abgabebehälter (5) verbunden ist, das andere Ende des Flüssigkeitszufuhrrohrs (6) in den Vorratsbehälter (4) eingeführt ist und eine Länge des Flüssigkeitszufuhrrohrs (6) so eingerichtet ist, dass das andere Ende des Flüssigkeitszufuhrrohrs (6) nicht aus dem Vorratsbehälter (4) herausragt, wenn sich der Abgabebehälter (5) vom Vorratsbehälter (4) wegbewegt.

5. Die Bekleidungsbehandlungsvorrichtung nach Anspruch 4, wobei der Vorratsbehälter (4) eine Führungsstruktur (41) aufweist, und das andere Ende des Flüssigkeitszufuhrrohrs (6) durch die Führungsstruktur (41) in den Vorratsbehälter (4) eingeführt ist.

6. Die Bekleidungsbehandlungsvorrichtung nach Anspruch 5, wobei die Bekleidungsbehandlungsmittelabgabevorrichtung weiterhin ein Dichtungselement (7) aufweist, das Dichtungselement (7) einen Hauptkörperteil und einen ersten Dichtungsabschnitt (71) und einen zweiten Dichtungsabschnitt (72) aufweist, die auf dem Hauptkörperteil gebildet sind, der erste Dichtungsabschnitt (71) hermetisch an einer Außenwand des Flüssigkeitszufuhrrohrs (6) befestigt ist, und das Dichtungselement (7) mittels des zweiten Dichtungsabschnitts (72) hermetisch mit der Führungsstruktur (41) verbunden ist.

7. Die Bekleidungsbehandlungsvorrichtung nach Anspruch 6, wobei das Dichtungselement (7) ein Dichtungsring ist, und ein Hauptkörperteil des Dichtungsrings einen Innendurchmesser aufweiset, der größer ist als ein Außendurchmesser des Flüssigkeitszufuhrrohrs (6).

8. Die Bekleidungsbehandlungsvorrichtung nach Anspruch 5, wobei die Führungsstruktur (41) ein an einer Außenwand des Vorratsbehälters (4) gebildetes Führungsrohranschlussstück ist.

9. Die Bekleidungsbehandlungsvorrichtung nach einem der Ansprüche 1 bis 8, wobei das Aufnahmeelement (1) ein Aufnahmekasten ist.

10. Die Bekleidungsbehandlungsvorrichtung nach einem der Ansprüche 1 bis 8, wobei die Bekleidungsbehandlungsvorrichtung eine Waschmaschine ist und die Bekleidungsbehandlungsmittelabgabevorrichtung ein Einspülkasten ist, um ein Waschmittel oder einen Weichspüler abzugeben.

## Revendications

1. Appareil de traitement de vêtements, comprenant un élément de réception (1) et un appareil de distribution d'agent de traitement de vêtements disposé dans l'élément de réception (1), l'appareil de distribution d'agent de traitement de vêtements étant relié de manière coulissante à l'élément de réception (1); un canal d'eau (2) étant formé entre une paroi extérieure de l'appareil de distribution d'agent de traitement de vêtements et une paroi intérieure de l'élément de réception (1) ; et une sortie d'eau (3) étant formée sur l'élément de réception (1) et communiquant avec le canal d'eau (2),
**caractérisé en ce que** le canal d'eau (2) comprend un premier canal d'eau (21) formé entre une paroi latérale extérieure de l'appareil de distribution d'agent de traitement des vêtements et une paroi latérale intérieure de l'élément de réception (1) et un second canal d'eau (22) formé entre une paroi arrière extérieure de l'appareil de distribution d'agent de traitement des vêtements et une paroi arrière intérieure de l'élément de réception (1), le premier canal d'eau (21) étant en communication avec le second canal d'eau (22).

2. Appareil de traitement des vêtements selon la revendication 1, dans lequel la sortie d'eau (3) est formée sur une plaque inférieure (11) de l'élément de réception (1).

3. Appareil de traitement des vêtements selon la revendication 2, dans lequel la plaque inférieure (11) est disposée obliquement et la sortie d'eau (3) est située à une extrémité inférieure de la plaque inférieure (11) pour permettre à toute l'eau du canal d'eau (2) de s'écouler vers la sortie d'eau (3).

4. Appareil de traitement de vêtements selon la revendication 1, dans lequel l'appareil de distribution d'agent de traitement de vêtements comprend un récipient de stockage (4), un récipient de distribution (5) et un tube de distribution de liquide (6), le récipient de stockage (4) est fixé dans l'élément de réception (1), le récipient de distribution (5) est relié de manière coulissante à l'élément de réception (1), une extrémité du tube de distribution de liquide (6) est en communication avec le récipient de distribution (5), l'autre extrémité du tube de distribution de liquide (6) est insérée dans le récipient de stockage (4), et une longueur du tube de distribution de liquide (6) est configurée de sorte que l'autre extrémité du tube de distribution de liquide (6) ne sorte pas du récipient de stockage (4) lorsque le récipient de distribution (5) s'éloigne du récipient de stockage (4).

5. Appareil de traitement de vêtements selon la revendication 4, dans lequel le récipient de stockage (4) est pourvu d'une structure de guidage (41), et l'autre extrémité du tube de distribution de liquide (6) est insérée à travers la structure de guidage (41) dans le récipient de stockage (4).

6. Appareil de traitement de vêtements selon la revendication 5, dans lequel l'appareil de distribution d'agent de traitement de vêtements comprend en outre un élément d'étanchéité (7), l'élément d'étanchéité (7) comprend un corps principal, ainsi qu'une première partie d'étanchéité (71) et une seconde partie d'étanchéité (72) formées sur le corps principal, la première partie d'étanchéité (71) est fixée hermétiquement à une paroi extérieure du tube de distribution de liquide (6), et l'élément d'étanchéité (7) est relié hermétiquement à la structure de guidage (41) par l'intermédiaire de la seconde partie d'étanchéité (72).

7. Appareil de traitement de vêtements selon la revendication 6, dans lequel l'élément d'étanchéité (7) est une bague d'étanchéité, et une partie du corps principal de la bague d'étanchéité a un diamètre intérieur supérieur au diamètre extérieur du tube de distribution de liquide (6).

8. Appareil de traitement de vêtements selon la revendication 5, dans lequel la structure de guidage (41) est un raccord de tuyau de guidage formé sur une paroi extérieure du récipient de stockage (4).

9. Appareil de traitement de vêtements selon l'une quelconque des revendications 1 à 8, dans lequel l'élément de réception (1) est une boîte de réception.

10. Appareil de traitement de vêtements selon l'une quelconque des revendications 1 à 8, dans lequel l'appareil de traitement de vêtements est une machine à laver, et l'appareil de distribution d'agent de traitement de vêtements est une boîte de distribution pour distribuer un détergent ou un après-shampoing.
